# EUROPÄISCHE PATENTSCHRIFT

(11) **EP 3 854 552 B1**
(45) Veröffentlichungstag und Bekanntmachung des Hinweises auf die Patenterteilung: **16.10.2024**
(21) Anmeldenummer: 20153702.4
(22) Anmeldetag: 24.01.2020
(51) Int. Cl.: B27N 7/00, B27N 3/18, B32B 21/14, B32B 27/20, B27N 9/00

(54) **VERFAHREN ZUM HERSTELLEN EINER FURNIERTEN PLATTE**
METHOD FOR PRODUCING A VENEERED PLATE
PROCÉDÉ DE FABRICATION D'UNE PLAQUE CONTREPLAQUÉE

(43) Veröffentlichungstag der Anmeldung: 28.07.2021
(73) Patentinhaber: Flooring Technologies Ltd., Kalkara SCM1001 (MT)
(72) Erfinder: HASCH, Prof. Dr. Joachim, 10317 Berlin (DE); Kalwa, Dr. Norbert, 32805 Horn-Bad Meinberg (DE)
(74) Vertreter: Kalkoff & Partner Patentanwälte mbB

(56) Entgegenhaltungen:
- DE-A1- 102011 085 996
- DE-A1- 102012 201 780
- DE-U1- 202013 012 020
- IT-A1- 201800 003 227
- US-A1- 2017 190 156
- US-A1- 2018 223 529

## Beschreibung

Die Erfindung betrifft ein Verfahren zum Herstellen einer furnierten Platte und eine furnierte Platte.

Furnierte Platten vermitteln den Eindruck einer Echtholz-Oberfläche, sind aber durch den sparsamen Einsatz der dünnen Furnierlagen in Verbindung mit einer Trägerplatte sehr wirtschaftlich. Eine typische furnierte Platte, bei der das Furnier mittels eines bindemittelgetränkten Papiers auf der Trägerplatte fixiert wird, wird in der EP 2 902 196 A1, aber auch der DE 103 00 347 B4 vorgestellt. Auch die DE 10 2011 085 996 A1, die IT 2018 0000 3227 A1 die DE 10 2012 2017 780 A1, die US 2017/190156 A1 und das Gebrauchsmuster DE 20 2013 012 020 U1 zeigen vergleichbare Platten.

Nachteilig an einer solchen bekannten furnierten Platte ist, dass der Aufbau der furnierten Platte komplex ist, und dass die Eigenschaften des Furniers nur sehr eingeschränkt verbessert werden können.

Es ist daher Aufgabe der Erfindung, ein Verfahren zum Herstellen einer einfach aufgebauten, furnierten Platte bereitzustellen, das es zudem ermöglicht, die Eigenschaften des Furniers auf einfache Weise zu verbessern.

Diese Aufgabe wird gelöst mit einem Verfahren nach Anspruch 1.

Das als Bindemittel eingesetzte Polyurethan-Präpolymer (PU-Präpolymer) erweist sich als vorteilhaft zum Fixieren eines Furniers auf einer Trägerplatte. Es ist als Präpolymer aus Isocyanaten einfacher zu verarbeiten als Isocyanat-Monomere. PU-Präpolymere werden üblicherweise aus zwei Diisocyanaten und einem Diol oder Glycol hergestellt. Dabei entsteht ein Präpolymer mit zwei Isocyanatgruppen. Es können aliphatische (z. B.: Isophorondiisocyanat, 1,6-Hexamethylendiisocyanat, 1,4-Cyclohexyldiisocyanat, Dicyclohexyl-4,4'-diisocyanat usw.) oder aromatische (Toluylendiisocyanat) Diisocyanate für die Herstellung der Präpolymere eingesetzt werden. Bei den Diolen bzw. Glycolen kommen 1,3-Propandiol oder niedermolekulare Polyethylenglycole zum Einsatz. Obwohl es sich um ein Präpolymer handelt, ist das PU-Präpolymer in der Lage, das Furnier ggf. beim Verpressen gleichmäßig und vollständig zu durchdringen, so dass das Furnier mit dem Bindemittel PU-Präpolymer gut an eine Trägerplatte angebunden werden kann. Das PU-Präpolymer härtet im Wesentlichen thermisch, also bei erhöhter Temperatur von beispielsweise 100 °C bis 240 °C aus; es handelt sich also um ein nachvernetzendes Polymer. Während des Verpressens dringt das Präpolymer in das Furnier, ggf. aber auch in die Trägerplatte bzw. deren Oberfläche ein. Das Bindemittel härtet also nicht nur aus, es wird durch das Verpressen auch mechanisch zwischen Furnier und Trägerplatte verankert. Dabei ist von besonderem Vorteil, dass Isocyanate mit allen OH-Gruppen enthaltenden Molekülen reagieren können (z. B.: Wasser, Cellulose, Hemicellulose, Lignin). Dies bedeutet, dass das Präpolymer mit der Holzmatrix des Furniers und des Trägermaterials chemisch vernetzt. An der fertigen furnierten Platte ist also ein Polyurethan als Bindemittel feststellbar. Dieses Bindemittel erweist sich als wasserfest, so dass eine mit einem PU-Präpolymer hergestellte furnierte Platte erweiterte Einsatzmöglichkeiten hat gegenüber einer mit nichtwasserfestem Bindemittel hergestellten furnierten Platte. Zudem bewirkt das erfindungsgemäße Bindemittel ein Verfestigen des Furniers, so dass sich die mechanischen Gebrauchseigenschaften des Furniers, insbesondere die Druckfestigkeit, verbessern. Das PU-Präpolymer ist transparent, kann jedoch auch eingefärbt werden. Dort, wo das Bindemittel im Bereich der Oberfläche des Furniers dem Licht ausgesetzt sein kann, empfiehlt sich der Einsatz von aliphatischen PU-Präpolymeren, die unter Belichtung nicht bzw. nur wenig reagieren, also transparent bleiben und nicht verfärben bzw. vergilben. Dort, wo es auf Lichtstabilität bzw. Lichtechtheit nicht ankommt, können auch aromatische PU-Präpolymere eingesetzt werden, die unter Einfluss von Licht stärker reagieren und zur Verfärbung neigen.

Als Trägerplatte kann jede auf mindestens einer Seite ebene Platte eingesetzt werden, die mit dem PU-Präpolymer bzw. mit dem Polyurethan als ausgehärtetem Bindemittel eine feste Verbindung eingeht. Vorzugsweise werden Holzwerkstoffplatten eingesetzt, z. B. mitteldichte oder hochdichte Faserplatten (MDF, HDF), Spanplatten, OSB (oriented strand board), Massivholzplatten, Sperrholz sowie Stab- oder Stäbchenplatten, aber auch zementgebundene Span- oder Faserplatten, aber auch Bio-Compositplatten, Platten mit hohem Bindemittelanteil, insbesondere Platten mit einem Anteil an Bindemittel von mehr als 50 Gew.-% bezogen auf das Gesamtgewicht der Platte, Platten, die ein Gemisch aus unterschiedlichen Fasern aufweisen, z. B. natürliche Fasern und Bicomponenten-Fasern. Die Trägerplatte weist eine Oberseite auf, auf die das Furnier aufgebracht wird, und eine Unterseite, auf die optional ein Gegenzug aufgebracht wird.

Als Furnier werden Lagen aus Echtholz eingesetzt, die eine Dicke von bis zu 10 mm, vorzugsweise jedoch von 0,2 mm bis 5 mm, insbesondere von 0,5 mm bis 3 mm aufweisen. Das Furnier kann einstückig von einem Stamm durch Messern oder Schälen hergestellt sein. Es kann aber auch aus einzelnen Abschnitten zusammengesetzt sein, die z. B. durch Bindemittel oder durch einen Leimfaden miteinander verbunden sind. Es weist in der Regel einen Feuchtegehalt von maximal 20 Gew.-%, bevorzugt von maximal 12 Gew.-%, insbesondere von maximal 8 Gew.-% auf. Das Furnier weist bevorzugt die Abmessungen der Trägerplatte auf. Das Furnier weist eine der Trägerplatte zugewandte Unterseite und eine der Trägerplatte abgewandte Oberseite auf.

Der Einsatz eines Additivs ermöglicht das gezielte Einstellen von Eigenschaften der furnierten Trägerplatte. Das Additiv. wird zwischen Furnier und Bindemittel aufgetragen, wobei das Additiv durch das Bindemittel während des Verpressens in das Furnier eingetragen wird. Diese Vorgehensweise erweist sich als besonders geeignet, mit sparsamem Einsatz des Additivs die gewünschte Wirkung zu erreichen. Das Additiv kann auf die dem Furnier zugewandte Oberfläche des Bindemittels aufgetragen werden, alternativ kann das Additiv auf die Furnieroberfläche aufgetragen werden, die dem Bindemittel zugewandt ist, meist die Unterseite des Furniers. Als Additiv können, jeweils einzeln oder in Mischung oder nacheinander, verschiedene Substanzen oder Verbindungen auf das Bindemittel aufgetragen werden. Als Additiv sind erfindungsgemäß geeignet: Flammschutzmittel wie z. B. Ammoniumphosphate oder Wasserglas, ein UV-Stabilisator, ein Infrarotabsorber, Mittel zur Erhöhung der Leitfähigkeit, antibakterielle Mittel, antifungizide Mittel, antialgizide Mittel, Hydrophobierungsmittel, Bleichmittel oder Beize. Je nach benötigter oder gewünschter Eigenschaft kommen natürlich auch beliebige andere Additive in Frage. Das Additiv kann als Feststoff, vorzugsweise als partikelförmiger Feststoff, z. B. als Staub oder Pulver, aber auch als Granulat vorliegen. Alternativ kann ein flüssiges oder pastöses Additiv eingesetzt werden. Allerdings kann das Additiv auch im Bindemittel löslich sein; dann wird das Additiv ggf. nicht vollständig mit an die Oberfläche transportiert. Dies ist eine Frage der Dosierung des Additivs.

Nach einer Weiterbildung der Erfindung ist das Additiv nicht in dem Bindemittel löslich bzw. nicht homogen im Bindemittel löslich. Auf diese Weise ist gewährleistet, dass das Additiv sich nicht mit dem Bindemittel vermischt und dadurch an Wirksamkeit verliert, sondern vielmehr auf der Oberfläche des Bindemittels verbleibt und dadurch möglichst vollständig in Kontakt mit dem Furnier kommt.

In einer einfachen Ausführung der Erfindung wird das Bindemittel wie nachstehend näher erläutert auf die Unterseite des Furniers oder die Oberseite der Trägerplatte aufgetragen. Nach einer bevorzugten Alternative wird zunächst das Additiv auf die Unterseite des Furniers aufgetragen. Vorteilhaft weist die Unterseite des Furniers beim Auftragen des Additivs nach oben, so dass das Additiv auf der Unterseite des Furniers liegt. Nach dem Auftragen des Additivs oder dem Auftragen einer Mischung von Additiven oder dem aufeinander folgenden Auftragen von mehreren Additiven kann optional das Additiv fixiert werden, z. B. durch Trocknen oder Erwärmen. Beispielsweise kann flüssiges Additiv, z. B. Tinte, getrocknet werden. Es hat sich gezeigt, dass trotz des Fixierens des Additivs das Additiv während des Pressvorgangs, wenn das Bindemittel vor dem Aushärten stärker verflüssigt wird und das Furnier mindestens abschnittsweise durchdringt, von dem PU-Präpolymer durch das Furnier transportiert wird, so dass z. B. ein ästhetischer Effekt zuverlässig mit geringem Einsatz an Additiv erzielt wird.

Anschließend wird Bindemittel auf das Furnier aufgetragen. Das Bindemittel wird bevorzugt in flüssiger Form aufgetragen, z. B. aufgesprüht oder aufgegossen. Typische Einsatzmengen betragen von 40 g/m² bis 400 g/m², bevorzugt zwischen 60 g/m² und 250 g/m², insbesondere zwischen 80 g/m² und 200 g/m². Ist allein ein Verkleben des Furniers mit der Trägerplatte beabsichtigt, genügt in der Regel je nach Art und Dicke des Furniers eine Einsatzmenge von bis zu 100 g/m². Ist ergänzend ein Durchdringen des Furniers erwünscht, so ist je nach Art und Dicke des Furniers eine Auftragsmenge von 80 g/m² bis 400 g/m² erforderlich. Das Bindemittel weist einen hohen Feststoffgehalt auf, meist über 80 Gew.-%, bevorzugt über 90 Gew.-% bezogen auf das Gesamtgewicht des Präpolymers. Das als Bindemittel aufgetragene Präpolymer kann daher kaum Flüssigkeit abgeben; es kann meist nicht getrocknet werden, sondern bleibt flüssig auf der Oberfläche des Furniers bzw. der Trägerplatte.

Nach dem Auftragen des Bindemittels bzw. des Additivs wird das Furnier bzw. die Trägerplatte also bevorzugt direkt weiterverarbeitet. Ist das Bindemittel auf die Oberseite der Trägerplatte aufgetragen, wird das Furnier für die weitere Verarbeitung mit der Unterseite auf die mit Bindemittel versehene Oberseite der Trägerplatte gelegt. Der Pressgutstapel ist also wie folgt ausgebildet: auf einer Oberseite der Trägerplatte liegt das Bindemittel auf, auf dem Bindemittel liegt optional das Additiv auf, darauf als äußere Lage das Furnier. Alterativ wird das auf seiner Unterseite mit Bindemittel und optional einem oder mehreren Additiven versehene Furnier auf die Oberseite der Trägerplatte aufgelegt. Trägerplatte, Bindemittel sowie optional das Additiv und das Furnier werden also zu einem Pressgutstapel geschichtet.

Optional kann ein Gegenzug auf der Unterseite der Trägerplatte angeordnet sein. Der Gegenzug soll die Zugkräfte kompensieren, die durch das Furnier auf der Oberseite der Trägerplatte ausgelöst werden. Der Gegenzug ist meist ein bindemittelgetränktes Papier oder eine bindemittelgetränkte Pappe, es könnte aber auch ein Furnier oder eine andere flächige Schicht sein, die flächig mit der Unterseite der Trägerplatte verbunden ist. Papier oder Pappe können aber auch mit dem Bindemittel auf der Unterseite der Trägerplatte verklebt werden. Bevorzugt wird ein Gegenzug eingesetzt, der der Beschichtung auf der Oberseite der Trägerplatte vergleichbar oder ähnlich ist. Vorteilhaft wird also ein Furnier eingesetzt, das mit dem Bindemittel und auch mit einem Additiv beschichtet ist. Der vorstehend beschriebene Pressgutstapel wird zu einer furnierten Platte verpresst.

In der Presse wird das PU-Präpolymer unter Einwirkung von erhöhter Temperatur ausgehärtet, d. h., die Viskosität des Bindemittels wird beim Erwärmen weiter herabgesetzt. Das PU-Präpolymer härtet während des Verpressens chemisch zu einem Polyurethan aus und erstarrt beim Abkühlen. Der Pressdruck bewirkt, dass das Bindemittel, so lange es noch nicht ausgehärtet ist, in das Furnier und bevorzugt auch in die Oberfläche der Trägerplatte eindringt. Damit wird die Grundlage für eine gute mechanische Verankerung des Bindemittels gelegt, die gewährleistet, dass eventuell im Furnier vorhandene Rückstellkräfte abgebaut sind bzw. durch das Bindemittel aufgenommen werden können, bevor die Presse geöffnet wird. Die Presszeit beträgt typisch zwischen 20 Sekunden und 60 Sekunden. Die Presstemperatur liegt meist zwischen 100 °C und 240 °C, bevorzugt zwischen 160 °C und 200 °C. Der Pressdruck beträgt zwischen 25 N/mm² und 50 N/mm². Während des Pressvorgangs dringt das flüssige Bindemittel in das Furnier. Das Furnier weist, anders als die dichtere Oberfläche der Trägerplatte, Hohlräume auf, zum einen herstellungsbedingte Risse und Spalten, aber auch holztypische Hohlräume, z. B. durch angeschnittene Gefäße. Das einfach in das Furnier eindringende Bindemittel bewirkt die feste Anbindung des Furniers an die Trägerplatte. Ein mindestens teilweises Eindringen des Bindemittels in die Oberfläche der Trägerplatte unterstützt die Anbindung von Furnier und Trägerplatte aneinander.

Dadurch, dass das PU-Präpolymer das Furnier mindestens abschnittsweise, bevorzugt vollständig durchdringt, entsteht eine furnierte Platte mit einer wasserfesten Oberfläche, da das Bindemittel in ausgehärtetem Zustand wasserfest ist. Das Furnier ist -wie alle Holzoberflächen- nicht wasserfest; es wird durch das PU-Präpolymer bzw. das während des Verpressens entstehende Polyurethan imprägniert, wodurch die furnierte Oberfläche wasserfest wird.

Diese Beschreibung zeigt deutlich, dass die Herstellung der furnierten Platte aus nur zwei Bestandteilen, dem mit Bindemittel sowie optional einem Additiv beschichteten Furnier und der Trägerplatte, bzw. einer mit dem Bindemittel und optional einem Additiv beschichteten Trägerplatte und einem Furnier erfolgt. Damit ist der Pressgutstapel besonders einfach herzustellen. Bei zwei Lagen, einer Trägerplatte und einem Furnier, von denen jeweils eine mit Bindemittel und ggf. Additiv beschichtet ist, besteht kein Risiko des Verrutschens oder Verschiebens der Lagen gegeneinander, die Produktion wird also weniger Ausschuss erzeugen. Trotzdem können sämtliche Gebrauchseigenschaften des Furniers wie gewünscht eingestellt werden, d. h., die furnierte Platte kann mit einer breiten Palette von Eigenschaften bereitgestellt werden. Das im Pressgutstapel auf dem Bindemittel optional aufliegende Additiv wird während des Pressvorgangs im Wesentlichen ohne Vermischung mit dem Bindemittel durch das Furnier gefördert und kann so ohne große Verluste direkt dort seine Wirkung entfalten, wo sie benötigt wird.

Weiter wird eine furnierte Platte beschrieben, aufweisend eine Trägerplatte und ein oberhalb der Trägerplatte angeordnetes Furnier, wobei das Furnier mindestens abschnittsweise bindemittelgetränkt ist, und dass sich optional auf der Oberseite des Bindemittels im Furnier ein Additiv befindet, das ausgewählt ist aus der Gruppe Flammschutzmittel, UV-Stabilisator, Infrarotabsorber, antibakterielle Mittel, antifungizide Mittel, antialgizide Mittel, Hydrophobierungsmittel, Bleichmittel, Beize. Das Additiv, das die Gebrauchseigenschaften des Furniers verbessert, befindet sich überwiegend im Furnier. Das Bindemittel, hier Polyurethan, ist im Wesentlichen frei von Additiv.

Die furnierte Platte weist nach einer weiteren Ausführungsform einen Gegenzug auf der Unterseite der Trägerplatte auf. Der Gegenzug kann ein bindemittelgetränktes Papier oder ein bindemittelgetränkter Karton bzw. eine Pappe sein, ist aber bevorzugt auch als Furnier ausgeführt. Papier oder Karton können auch durch das Bindemittel mit der Unterseite der Trägerplatte verklebt sein. Der Gegenzug wird als Bestandteil des Pressgutstapels mit der Trägerplatte verpresst und bewirkt, dass sich die furnierte Platte nicht verzieht, weil nun auf beiden Seiten der Trägerplatte annähernd gleiche Kräfte wirken. Wird ein Furnier als Gegenzug eingesetzt, so kann es in gleicher Weise wie vorstehend für das Furnier auf der Oberseite der Trägerplatte beschrieben mit einem Bindemittel und optional mit einem Additiv versehen sein.

Als Trägerplatte kann jede Platte eingesetzt werden, die eine ebene Oberfläche aufweist. Bevorzugt ist die Trägerplatte eine Holzwerkstoffplatte oder eine BioCompositplatte, so wie vorstehend beschrieben.

Details der Erfindung werden an Hand von Ausführungsbeispielen näher erläutert. Es zeigen:

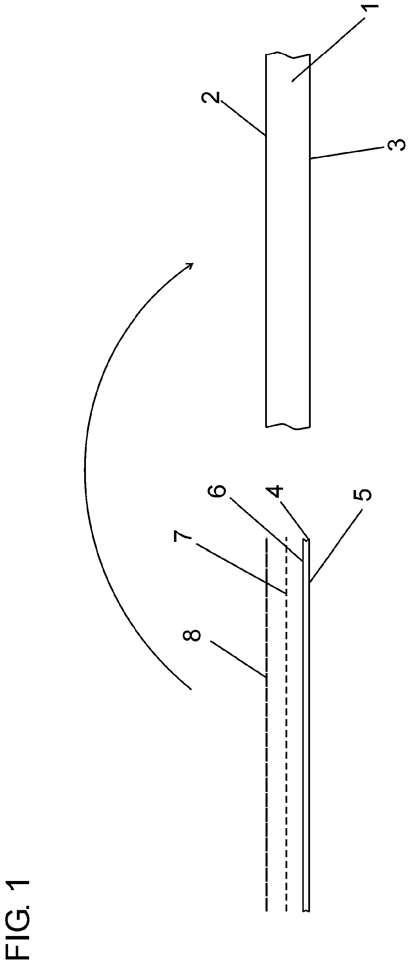

Fig. 1 eine schematische Darstellung eines mit dem Bindemittel versehenen Pressgutstapels Die Bestandteile der furnierten Platte sind eine Trägerplatte 1 mit einer Oberseite 2 und einer Unterseite 3. Des Weiteren ist Bestandteil der furnierten Platte ein Furnier 4 mit einer Unterseite 5 und einer Oberseite 6. Vor dem Schichten eines Pressgutstapels wird die Trägerplatte 1 bzw. das Furnier 4 hergerichtet. Das erfolgt entweder, indem das Furnier mit der Unterseite 5 nach oben angeordnet wird. Auf die Unterseite des Furniers 4 wird optional zunächst ein Additiv 7 aufgebracht. Alternativ kann eine Mischung von Additiven aufgebracht werden oder es werden mehrere Additive in Folge aufgetragen. Sind ggf. das bzw. die Additive 7 aufgebracht, wird eine Schicht Bindemittel 8 aufgebracht. Als Bindemittel wird hier ein PU-Präpolymer eingesetzt. Das Bindemittel 8 wird in flüssiger Form eingesetzt. Das Bindemittel 8 wird in flüssiger Form mittels einer Walze oder einer Gießmaschine aufgetragen. Alternativ wird das erfindungsgemäße Bindemittel auf die Oberseite 2 der Trägerplatte 1 aufgetragen.

Die weitere Herstellung einer furnierten Platte erfolgt dadurch, dass das Furnier 4 mit seiner Unterseite 5 auf die Oberseite 2 einer Trägerplatte bevorzugt ohne Zwischentrocknung aufgelegt wird, wodurch ein Pressgutstapel geschichtet wird, bei dem das erfindungsgemäße Bindemittel 8 zwischen Trägerplatte 1 und Furnier 4 angeordnet ist. Der Pressgutstapel wird in einer Presse zu einer furnierten Platte verpresst. Optional wird der Pressgutstapel um einen Gegenzug ergänzt, der auf der Unterseite 3 der Trägerplatte 1 angebracht wird und der dann die Unterseite der furnierten Platte 1 bildet. Der Gegenzug ist nach einer vorteilhaften Ausführung in gleicher Weise ausgebildet wie das Furnier 4 auf der Oberseite der Trägerplatte. Grundsätzlich ist aber jede Beschichtung auf der Unterseite der Trägerplatte als Gegenzug geeignet, die mindestens teilweise die Kräfte auffängt, die durch das auf der Oberseite 2 der Trägerplatte 1 angeordnete Furnier 4 ausgeübt wird.

### Ausführungsbeispiel 1

| Ausgangsmaterialien: | | |
|---|---|---|
| Furnier: | Stärke: | 0,8 mm |
| | Art: | Eiche |
| | Dieses Furnier wird auf der Oberseite 2 der Trägerplatte 1 eingesetzt. | |
| Bindemittel: | aliphatisches PU-Präpolymer in flüssiger Form | |
| | Dieses Bindemittel wird zwischen der Oberseite 2 der Trägerplatte 1 und dem Eichenfurnier eingesetzt. Es ist nach Herstellung der furnierten Trägerplatte dem Licht ausgesetzt. | |
| Trägerplatte: | Stärke: | 10 mm |
| | Art: | HDF (hochdichte Faserplatte) |
| Bindemittel: | aromatisches PU-Präpolymer678.05 (Hersteller: Jowat) in flüssiger Form | |
| | Dieses Bindemittel wird zwischen der Unterseite 3 der Trägerplatte 1 und dem als Gegenzug verwendeten Birkenfurnier eingesetzt. | |
| Furnier: | Stärke: | 1,05 mm |
| | Art: | Birke |
| | Dieses Furnier wird auf der Unterseite 3 der Trägerplatte 1 eingesetzt. | |

### Herstellung der furnierten Trägerplatte:

Auf die Trägerplatte, hier eine HDF-Platte (hochdichte Faserplatte) mit dem Format: 2800 x 2070 x 10 mm (Länge x Breite x Dicke) werden 100g/m² PU-Präpolymer mit dem Produktnamen 678.05 der Fa. Jowat aufgetragen. Dieses PU-Präpolymer wurde auf Basis von aromatischen Isocyanaten und Alkohol hergestellt, die zu einem Präpolymer reagiert wurden. Das PU-Präpolymer ist flüssig. Der Feststoffgehalt beträgt ca. 90 Gew.-% bezogen auf das Gesamtgewicht des PU-Präpolymers. Die Viskosität beträgt etwa 65 mPas (20°C, Brookfield). Das Auftragen des PU-Präpolymers erfolgt mit Hilfe einer Gießmaschine.

Dann wird das PU-Präpolymer auf das Birkenfurnier aufgebracht. Das Birkenfurnier, das auf der Unterseite 3 der Trägerplatte 1 fixiert werden soll, wird unter die mit Bindemittel versehene Unterseite 3 der Trägerplatte gelegt und so zu einem Pressgutstapel geschichtet. Der Pressgutstapel wird in einer Kurztaktpresse (KT-Presse) verpresst. Die Pressbedingungen der KT-Presse werden wie folgt eingestellt: Presstemperatur 180°C, Druck 40 kg/cm² und Pressdauer 60 Sekunden. Die Presstemperatur gewährleistet das Aushärten des Bindemittels während der Pressdauer und der Pressdruck bewirkt ein Komprimieren des Furniers bei gleichzeitigem Eindringen des PU-Präpolymers.

Dann wird die KT-Presse geöffnet und die einseitig beschichtete HDF-Platte kühlt ab. Die einseitig auf der Unterseite 3 beschichtete Trägerplatte 1 wird gedreht und es werden 200 g/m² Präpolymer auf Basis von aliphatischen Isocyanaten auf die Oberseite 2 der Trägerplatte 1 aufgebracht. Dann wird das Eichenfurnier aufgelegt und dieser Pressgutstapel wird wiederum bei den oben genannten Parametern verpresst. Auch hier erfolgen Aushärten des Bindemittels unter thermischer Einwirkung und Eindringen des Bindemittels in das Furnier sowie Komprimieren des Furniers unter Einwirkung des Pressdrucks. Die nun beidseits furnierte Platte wird abgekühlt. Danach werden aus der beidseits furnierten Trägerplatte 1 Fußbodendielen mit einem leimlosen Profil gefräst. Dabei dient die Eichenfurnierseite als Nutzfläche. Zum Anbringen des Eichenfurniers auf der dem Licht ausgesetzten Nutzfläche ist ein aliphatisches PU-Präpolymer aufgetragen worden, das unter Lichteinfluss nicht oder kaum reagiert, insbesondere nicht seine Farbe verändert bzw. vergilbt.

Durch das Verpressen der furnierten Trägerplatte unter hohem Druck wird - wie vorstehend beschrieben - das Furnier komprimiert, während gleichzeitig das Bindemittel das Furnier durchdringt. Es entsteht somit eine furnierte Trägerplatte, die eine mechanisch besonders belastbare Furnieroberfläche, insbesondere eine Furnieroberfläche mit erhöhter Druckfestigkeit aufweist. Zudem ist das Polyurethan, das während des Verpressens entsteht, ein wasserfestes Bindemittel, so dass auch das an sich nicht wasserfeste Furnier durch das darin mindestens abschnittsweise eingedrungene Bindemittel wasserfest gestaltet wird.

### Ausführungsbeispiel 2

| Ausgangsmaterialien: | | |
|---|---|---|
| Furnier: | Stärke: | 0,8 mm |
| | Art: | Eiche |
| Dieses Furnier wird auf der Oberseite 2 der Trägerplatte 1 eingesetzt. | | |
| Bindemittel: | aliphatisches PU-Präpolymer in flüssiger Form | |
| | Dieses Bindemittel wird zwischen der Oberseite 2 der Trägerplatte 1 und dem Eichenfurnier eingesetzt. Es ist nach Herstellung der furnierten Trägerplatte dem Licht ausgesetzt. | |
| Trägerplatte: | Stärke: | 10 mm |
| | Art: | HDF (hochdichte Faserplatte) |
| Gegenzug: | Melaminharzimprägniertes Papier | |

### Herstellung der furnierten Trägerplatte:

Auf die Trägerplatte 1, hier eine HDF-Platte (Format: 2800 x 2070 x 10 mm), werden 200g/m² flüssiges PU-Präpolymer auf Basis von aliphatischen Isocyanaten mit Hilfe einer Sprühvorrichtung aufgetragen. Optional wird ein Additiv aufgetragen, z. B. ein Farbstoff. Dann wird auf das Polymer mit dem optional aufgetragenen Additiv das Eichenfurnier aufgelegt. Auf der Rückseite wird ein mit Melaminharz imprägniertes Papier als Gegenzug positioniert. Das mit Melaminharz imprägnierte Papier weist ein Papiergewicht von 80 g/m² und einen Harzauftrag von 120 Gew.-% bezogen auf das Papiergewicht auf. Der Pressgutstapel aus dem Gegenzug auf der Unterseite 3 der Trägerplatte 1, der Trägerplatte 1 und dem Furnier 4 auf der Oberseite 2 der Trägerplatte 1 wird in einer KT-Presse verpresst. Die Presstemperatur beträgt 180 °C, der Pressdruck ist auf 30 kg/cm² eingestellt und die Presszeit beträgt 60 Sekunden. Dann lässt man die furnierte Trägerplatte 1 abkühlen. Während der Presszeit wird das Präpolymer durch den Pressdruck in das Furnier und oft auch in die Oberfläche der Trägerplatte hineingedrückt, so dass sich das aushärtende Präpolymer dort auch mechanisch verankert. Gleichzeitig komprimiert der Pressdruck das Furnier und verdichtet es dadurch. Zudem werden Rückstellkräfte im Furnier reduziert oder eliminiert.

Nach dem Aushärten und dem Abkühlen des Präpolymers werden daraus Fußbodendielen mit einem leimlosen Profil gefräst. Dabei dient die Eichenfurnierseite als Nutzfläche. Der erhöhte Einsatz von Bindemittel bewirkt hier, dass das Furnier von dem Bindemittel durchdrungen ist und somit vollständig wasserfest ist. Der Gegenzug kann vorteilhaft mit der Trägerplatte in einem Pressvorgang verpresst werden, weil Melamin unter den für das Verpressen gewählten Bedingungen ebenfalls aushärtet. Hier wird also im Gegensatz zum Ausführungsbeispiel 1 ein Pressvorgang eingespart.

Selbstverständlich kann dem Präpolymer auch ein Additiv oder eine Mischung von Additiven zugemischt werden, die bestimmte Eigenschaften in dem Produkt erzeugen. Dies können zum Beispiel Farbstoffe, Mittel zur Erhöhung der Leitfähigkeit usw. sein. Das Additiv kann aber nach einer bevorzugten Ausführung auch zwischen Furnier 4 und Bindemittel 8 aufgetragen werden, so dass das Additiv oberflächennah wirken kann, da Additive meist eingesetzt werden, um Oberflächeneffekte zu bewirken.

Die furnierte Trägerplatte nach der Erfindung kann in allen Anwendungen eingesetzt werden, wo auch bisher furnierte Oberflächen eingesetzt wurden. Weiterhin können die Platten mit den Furnieroberflächen neben der Herstellung von Fußbodenpaneelen natürlich auch zur Herstellung von Wand- oder Deckenverkleidungen eingesetzt werden. Auch der Einsatz bei der Herstellung von Möbeln ist möglich.

### Ausführungsbeispiel 3

| Ausgangsmaterialien: | | |
|---|---|---|
| Furnier: | Stärke: | 0,8 mm |
| | Art: | Eiche |
| | Dieses Furnier wird auf der Oberseite 2 der Trägerplatte 1 eingesetzt. | |
| Bindemittel: | aliphatisches PU-Präpolymer | |
| | Dieses Bindemittel wird zwischen der Oberseite 2 der Trägerplatte 1 und dem Eichenfurnier eingesetzt. Es ist nach Herstellung der furnierten Trägerplatte dem Licht ausgesetzt. | |
| Trägerplatte: | Stärke: | 10 mm |
| | Art: | Faserplatte, aufweisend 48 Gew.-% Holzfasern und 52 Gew.-% Melaminharz, jeweils bezogen auf das Gesamtgewicht der Platte. |
| Bindemittel: | aromatisches PU-Präpolymer678.05 Jowat | |
| | Das Bindemittel wird zwischen der Unterseite 3 der Trägerplatte und dem als Gegenzug eingesetzten Birkenfurnier aufgebracht. | |
| Furnier: | Stärke: | 1,05 mm |
| | Art: | Birke |

### Herstellung der furnierten Trägerplatte:

Die Trägerplatte (1) nach dem Ausführungsbeispiel 3 wird auf die gleiche Weise furniert wie die furnierte Trägerplatte nach dem Ausführungsbeispiel 1.

Da die Trägerplatte (1), die beim Ausführungsbeispiel 3 eingesetzt ist, und auch das Bindemittel wasserfest sind, wird eine wasserfeste, furnierte Trägerplatte 1 bereitgestellt.

## Patentansprüche

1. Verfahren zum Herstellen einer furnierten Platte, aufweisend ein Furnier (4) mit einer Oberseite (6) und mit einer Unterseite (5) und eine Trägerplatte (1) mit einer Oberseite (2) und mit einer Unterseite (3), mit den Schritten:
- Bereitstellen eines Furniers (4)
- Aufbringen eines Additivs (7) zwischen Bindemittel (8) und Furnier (4), anschließend Aufbringen eines Bindemittels (8) auf die Oberseite (2) der Trägerplatte (1) oder die Unterseite (5) des Furniers (4), wobei ein PU-Präpolymer als Bindemittel eingesetzt wird,
- Herstellen eines Pressgutstapels aufweisend die Trägerplatte (1) und das Furnier (4) mit dem zwischen Trägerplatte (1) und Furnier (4) angeordneten Bindemittel (8) und dem zwischen Bindemittel (8) und Furnier (4) angeordneten Additiv (7),
- Verpressen des Pressgutstapels zu einer furnierten Platte,
wobei als Additiv (7) eine der nachstehenden Substanzen jeweils einzeln oder in Mischung eingesetzt wird: Flammschutzmittel, UV-Stabilisator, Infrarotabsorber, Mittel zur Erhöhung der Leitfähigkeit, antibakterielle Mittel, antifungizide Mittel, antialgizide Mittel, Hydrophobierungsmittel, Bleichmittel, Beize.

2. Verfahren nach Anspruch 1, **dadurch gekennzeichnet, dass** ein aliphatisches und/oder ein aromatisches PU-Präpolymer als Bindemittel (8) eingesetzt wird.

3. Verfahren nach einem der vorstehenden Ansprüche, **dadurch gekennzeichnet, dass** das Additiv (7) als partikelförmiger Feststoff oder in flüssiger Form aufgetragen wird.

4. Verfahren nach einem der vorstehenden Ansprüche, **dadurch gekennzeichnet, dass** das Additiv (7) nicht in dem Bindemittel (8) lösbar oder nicht homogen in dem Bindemittel (8) lösbar ist.

5. Verfahren nach einem der vorstehenden Ansprüche, **dadurch gekennzeichnet, dass** das Bindemittel (8) flüssig aufgetragen wird.

6. Verfahren nach einem der vorstehenden Ansprüche, **dadurch gekennzeichnet, dass** die Presstemperatur zwischen 100 °C und 240 °C beträgt.

7. Verfahren nach einem der vorstehenden Ansprüche, **dadurch gekennzeichnet, dass** die Pressdauer zwischen 20 Sekunden und 60 Sekunden beträgt.

8. Verfahren nach einem der vorstehenden Ansprüche, **dadurch gekennzeichnet, dass** der Pressdruck zwischen 25 N/mm² und 50 N/mm² beträgt.

## Claims

1. A method for producing a veneered board, which comprises a veneer (4) having an upper face (6) and a lower face (5) and a carrier board (1) having an upper face (2) and a lower face (3), comprising the steps of:
- providing a veneer (4),
- applying an additive (7) between binder (8) and veneer (4), then applying a binder (8) onto the upper face (2) of the carrier board (1) or the lower face (5) of the veneer (4), wherein a PU prepolymer is used as the binder,
- producing a stack of materials to be pressed comprising the carrier board (1) and the veneer (4) with the binder (8) arranged between the carrier board (1) and the veneer (4) and with the additive (7) arranged between the binder (8) and the veneer (4),
- pressing the stack of materials to be pressed in order to form a veneered board
wherein one of the following substances is used as an additive (7), either individually or in a mixture: flame retardant, UV stabilizer, infrared absorber, agent for increasing conductivity, antibacterial agent, antifungal agent, an-tialgal agent, hydrophobizing agent, bleaching agent, stain.

2. The method according to claim 1, **characterized in that** an aliphatic and/or aromatic PU prepolymer is used as the binder (8).

3. The method according to one of the preceding claims, **characterized in that** the additive (7) is applied as a particulate solid or in liquid form.

4. The method according to one of the preceding claims, **characterized in that** the additive (7) is not soluble in the binder (8) or is not homogeneously soluble in the binder (8).

5. The method according to one of the preceding claims, **characterized in that** the binder (8) is applied as a liquid.

6. The method according to one of the preceding claims, **characterized in that** the pressing temperature is between 100°C and 240 °C.

7. The method according to one of the preceding claims, **characterized in that** the pressing time is between 20 seconds and 60 seconds.

8. The method according to one of the preceding claims, **characterized in that** the pressing pressure is between 25 N/mm² and 50 N/mm².

## Revendications

1. Procédé de fabrication d'un panneau plaqué, qui comprend un placage (4) ayant une face supérieure (6) et une face inférieure (5) et un panneau support (1) ayant une face supérieure (2) et une face inférieure (3), comprenant les étapes suivantes :
- fournier un placage (4),
- appliquer un additif (7) entre le liant (8) et le placage (4), puis appliquer un liant (8) sur la face supérieure (2) du panneau support (1) ou sur la face inférieure (5) du placage (4), un prépolymère PU étant utilisé comme liant,
- produire une pile de matériaux à presser comprenant la panneau support (1) et le placage (4), le liant (8) étant disposé entre la panneau support (1) et le placage (4) et l'additif (7) étant disposé entre le liant (8) et le placage (4),
- presser la pile de matériaux à presser pour former un panneau plaqué
dans lequel l'une des substances suivantes est utilisée comme additif (7), individuellement ou en mélange : retardateur de flamme, stabilisateur UV, absorbeur d'infrarouges, agent augmentant la conductivité, agent antibactérien, agent antifongique, agent antialgues, agent hydrophobe, agent de blanchiment, colorant.

2. Procédé selon la revendication 1, **caractérisé par** l'utilisation d'un prépolymère PU aliphatique et/ou aromatique comme liant (8).

3. Procédé selon l'une des revendications précédentes, **caractérisée par le fait que** l'additif (7) est appliqué sous forme de particules solides ou sous forme liquide.

4. Procédé selon l'une des revendications précédentes, **caractérisé par le fait que** l'additif (7) n'est pas soluble dans le liant (8) ou n'est pas soluble de façon homogène dans le liant (8).

5. Procédé selon l'une des revendications précédentes, **caractérisé par le fait que** le liant (8) est appliqué sous forme liquide.

6. Procédé selon l'une des revendications précédentes, **caractérisé par le fait que** la température de pressage est comprise entre 100°C et 240°C.

7. Procédé selon l'une des revendications précédentes, **caractérisée par le fait que** le temps de pressage est compris entre 20 secondes et 60 secondes.

8. Procédé selon l'une des revendications précédentes, **caractérisé par le fait que** la pression de pressage est comprise entre 25 N/mm² et 50 N/mm².
